# EUROPEAN PATENT SPECIFICATION

(11) **EP 1 425 533 B1**
(45) Date of publication and mention of the grant of the patent: **11.05.2005**
(21) Application number: 02751918.0
(22) Date of filing: 19.08.2002
(51) Int. Cl.: F16L 19/06, F16L 19/08, F16L 33/22

(54) **SUPPORT SLEEVE FOR USE IN A TUBE COUPLING AND A COUPLING HOUSING FOR USE TOGETHER WITH SAID SLEEVE**
STÜTZHÜLSE ZUR VERWENDUNG IN EINER ROHRKUPPLUNG UND KUPPLUNGSGEHÄUSE ZUR VERWENDUNG ZUSAMMEN MIT DER HÜLSE
MANCHON SUPPORT POUR RACCORD DE TUYAU ET BOITIER DE RACCORD ASSOCIE A CE MANCHON

(30) Priority: 21.08.2001 NO 20014068
(43) Date of publication of application: 09.06.2004
(73) Proprietor: RAUFOSS ASA, 2806 Raufoss (NO)
(72) Inventor: PEDERSEN, Egil, N-2830 Raufoss (NO); SANGRO, Jan, Erik, N-2319 Hamar (NO)
(74) Representative: Resch, Michael
(86) International application number: PCT/NO2002/000281
(87) International publication number: WO 2003/021143

(56) References cited:
- EP-A1- 0 503 737
- EP-A1- 0 546 405
- WO-A-01/48414
- SE-C2- 515 889
- US-A- 4 192 532

## Description

The invention relates to a tube coupling comprising a coupling housing and a supporting sleeve in order to cause an internal stiffening against compression of the end of a tube inserted in the coupling, said supporting sleeve being a separate part for being mounted in a bore in the coupling, and said supporting sleeve comprising a deformable collar which externally is conical and narrowing in the direction of insertion, the edge of the collar having a diameter exceeding the diameter of the bore.

### Prior art

Supporting sleeves are used in tube couplings, in particular in those which contain a clamping ring and/or a sealing ring, as an internal stiffening against compressing of a tube inserted in the coupling, in order to prevent that the tube collapses due to the pressure from outside exerted by the clamping ring and/or sealing ring. This may in particular occur when the tube is of a soft material, but also when the clamping ring and/or sealing ring exerts a high pressure against the outside of the tube. Thereby, the sealing around the tube and/or the retaining thereof may become insufficient.

NO Patent 149598 and EP-B-0 035 519, respectively, show an example of a coupling which contains a supporting sleeve made integrally with a coupling housing.

Moreover, it is known to insert separate supporting sleeves in coupling housings. Reference is made to DE Patent Application 2450126, showing a supporting sleeve attached on the end of the tube inserted in the coupling housing in that the tube has internal grooves at the end. This solution makes it necessary to machine the tube end in order to form the grooves. EP Patent Application 0546405 shows a separate supporting sleeve having an end portion with a conical external shape, adapted to a conical surface in a coupling housing. Moreover, the end portion has an annular groove, into which the end of a tube can be inserted. The supporting sleeve will not be kept in place in the coupling housing before a second coupling housing has been screwed on.

A tube coupling as specified introductorily is known from WO 01/48414 A. The supporting sleeve has a circumferential groove, into which the tube is deformed when screwing two coupling parts together. The collar of the supporting sleeve is only partly inserted in the bore of the coupling housing, and the supporting sleeve will not be kept in place in the coupling housing before a second coupling housing has been screwed on.

With the present invention has been provided a tube coupling in which a supporting sleeve in a simple manner is retained upon insertion.

The tube coupling according to the invention is characterized by the features appearing from claim 1. Embodiments of the tube coupling are specified in the claims 2 - 9.

### Summary of the invention.

Because the supporting sleeve has a collar which is externally conical, the supporting sleeve may simply be inserted in a cylindrical bore in the coupling housing, and because the diameter of the collar in undeformed state of the collar exceeds the diameter of the bore, the collar will in inserted state form an obstruction against pulling out the supporting sleeve. The bore in the coupling housing may have an annular groove into which the edge of the collar will protrude. The collar may have a correspondingly increased radial dimension, whereby the collar is deformed in the mounted state of the supporting sleeve.

Preferably the coupling housing comprises a second bore in the succession of the bore into which the supporting sleeve is inserted, and this second bore is adapted to an extension of the supporting sleeve, whereby the supporting sleeve is centered in the coupling housing and aligned with the longitudinal axis of the coupling housing. Without such a second bore there is a possibility of inserting the supporting sleeve in such a manner that it is not exactly aligned with the longitudinal axis of the coupling housing, and the retaining of the supporting sleeve may be impaired. Moreover, the insertion of a tube in the coupling housing may be more difficult. The second bore and the extension of the supporting sleeve also cause that the supporting sleeve is kept centered along the longitudinal axis even if it is subjected to an external strain, such as an impact or stroke.

The invention will in the following be explained with reference to the accompanying drawings, which show longitudinal sections through examples of a tube coupling with a coupling housing containing a supporting sleeve, according to the invention.

### Explanation of the drawings.

- Fig. 1: shows a coupling housing which contains a supporting sleeve, according to the invention.
- Fig. 2: shows a coupling socket which has been screwed onto the coupling housing and which contains a clamping ring and two O-rings, and a third O-ring is jammed between the coupling socket and the coupling housing.
- Fig. 3: shows the coupling of Fig. 2 and the end of a tube having been inserted into the coupling.
- Fig. 4: shows approximately the same as Fig. 2, and shows a coupling housing formed in accordance with the invention, somewhat differently shaped internally than the coupling housing shown in the Figs. 1 - 3.

### Description of embodiments

The Figs. show a tube coupling according to the invention, containing a supporting sleeve 1 comprising a first cylindrical portion 2, an external conical collar 3 and an extension 4. The supporting sleeve 1 is shown mounted in a coupling housing 5, which in the example shown is formed with a nut portion 6, for instance with an external hexagonal shape in order to be screwed by means of a wrench. Moreover, the coupling housing 5 comprises a first, externally threaded stub 7 for screwing on of a coupling socket which in screwed-on state may contain a clamping ring and/or a sealing ring around the cylindrical portion of the supporting sleeve 2, and a second, externally threaded stub 8 for attaching the coupling housing 5 to another member. Instead of being formed with the stub 8 the coupling housing may be symmetrical about a transverse middle plane and comprise two oppositely directed stubs 7 for screwing on of two coupling sockets, whereby the coupling may be used for joining two tubes. Thereby, each half of the coupling will contain a supporting sleeve 1.

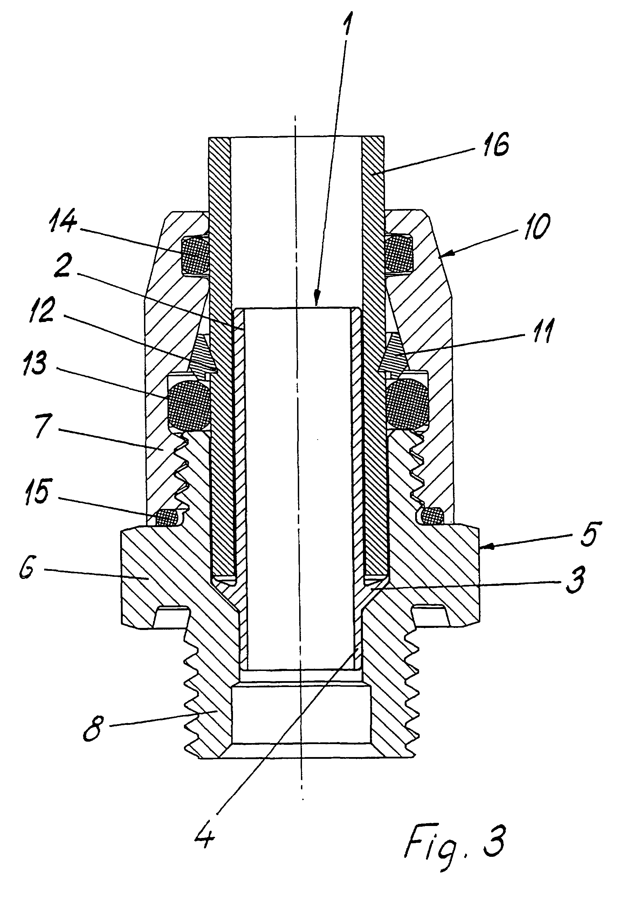

The supporting sleeve 1 is in the examples shown made as a single piece. The cylindrical portion 2 constitutes the active part of the supporting sleeve, by stiffening a tube being inserted in the coupling against external pressure from a clamping ring and/or a sealing ring which in the mounted state surround the tube externally of the portion 2, as shown in Fig. 3. An annulus 9 for insertion of the end of a tube into the coupling housing externally of the portion 2 is mainly adapted to the wall thickness of the inserted tube. The collar 3 causes that the supporting sleeve 1 is retained, and constitutes an end abutment for an inserted tube. The extension 4 constitutes a guide for the supporting tube 1 during insertion into the coupling housing 5 and ensures that the supporting sleeve 1 will be aligned with the longitudinal axis of the coupling housing. In the example shown the extension 4 has a somewhat smaller length and outer diameter than the portion 2, because the extension 4 is not to be exposed to external pressure.

The collar 3 has in the example shown a conical shape externally as well as internally, and in such a manner that the external conus angle is smaller than the internal conus angle; i.e. that the axial thickness of the collar 3 decreases radially outwardly. This means that the stiffness of the collar also decreases outwardly. The collar 3 may also be planar on the upper side.

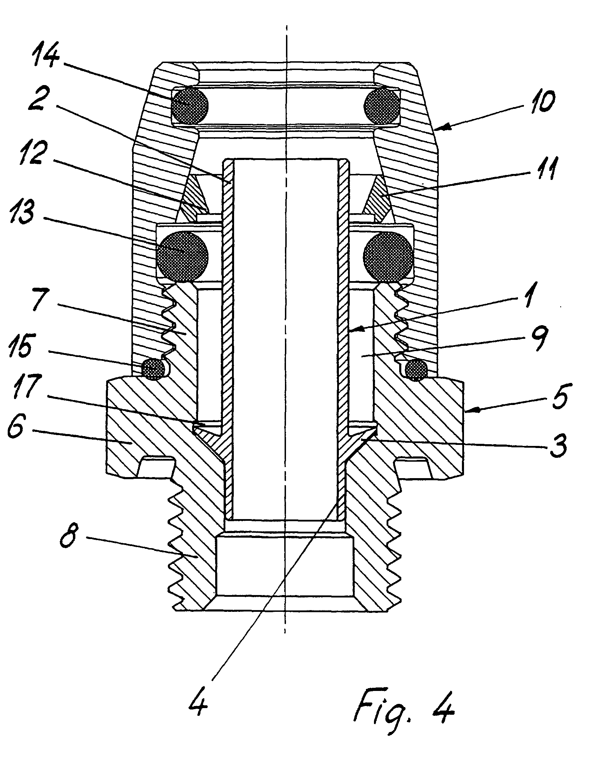

The circumferential edge of the collar 3 is in the example shown somewhat deformed upon insertion, and will press against the wall of the bore due to its elasticity. Due to the conicity of the collar 3 the collar will tend to widen if an attempt is made to pull the supporting sleeve 1 out of the coupling housing, and the resistance against pulling out will increase. The bore in the coupling housing 5 may, as shown in Fig. 4, have an annular groove 17 at the inner end, for accommodating the edge of the collar 3. The collar 3 may have a correspondingly increased radial dimension, whereby the collar is deformed in the mounted state of the supporting sleeve. Also with such an embodiment the collar 3 will tend to widen if an attempt is made to pull the supporting sleeve 1 out of the coupling housing 5.

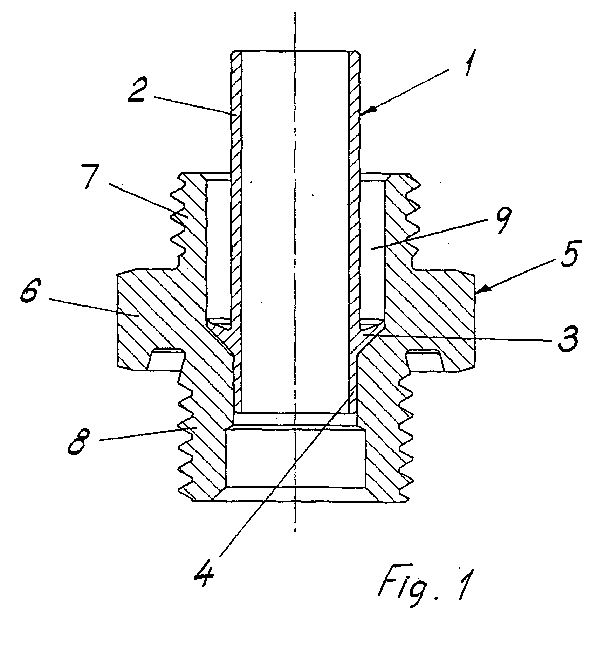

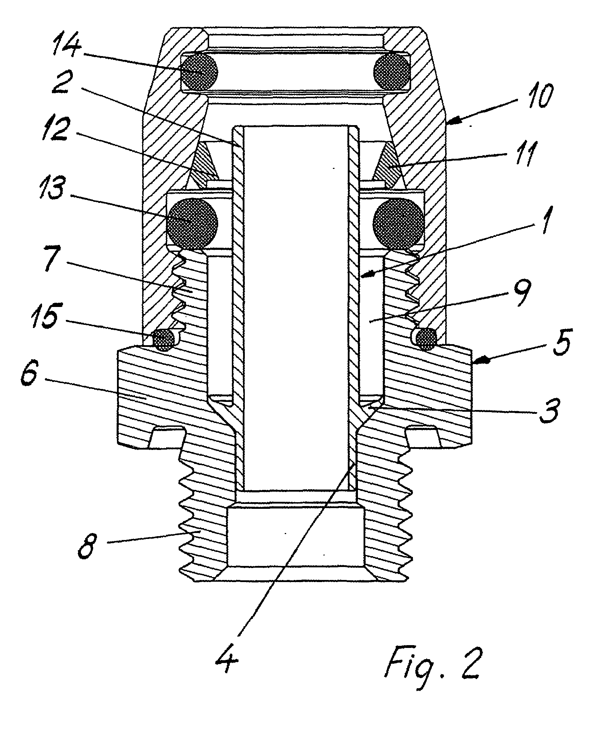

Fig. 2 shows the same coupling housing 5 and the same supporting sleeve 1 as Fig. 1. A coupling socket 10 is here screwed onto the coupling housing 5, and contains a clamping ring 11 and two O-rings 13 and 14. A third O-ring 15 causes sealing between the coupling housing 5 and the coupling socket 10.

Fig. 3 shows the same coupling as Fig. 2 and in addition an end of a tube 16 having been inserted into the coupling by being forced through the clamping ring 11 and the O-rings 13 and 14. It appears that an edge 12 on the clamping ring has been forced somewhat into the tube wall, for retaining of the tube.

Fig. 4 shows mainly the same as Fig. 3, the difference being that the coupling housing 5 is formed with an annular groove 17 at the bottom of the bore which defines the annulus 9 accomodating the tube 16, whereby the outer edge of the collar 3 on the supporting sleeve 1 has expanded into the annular groove 17 when the insertion of the supporting sleeve 1 has been completed. As the collar 3 has a somewhat larger radial dimension than the annular groove 17, the edge of the collar 3 presses against the wall of the annular groove 17. Thereby, the supporting sleeve 1 is locked in the bore.

The supporting sleeve does not need to be unitary as shown. For instance, the collar 3 may be a part mounted on the remainder of the supporting sleeve. The collar 3 may for instance be fastened by being snapped into an annular groove in the portion 2, by being pressed onto the portion 2 or by being glued to the portion 2. This is particularly of interest if it is desirable that the collar is to be of another material than the remainder of the supporting sleeve.

In particular plastics are suited as material for the supporting sleeve, or at least for the collar 3, and preferably hard plastics. When the collar 3 constitutes a separate part, the remainder of the supporting sleeve may for instance be of metal.

The supporting sleeve 1 will give a large resistance against being pulled out, as long as it is aligned with the longitudinal axis of the coupling housing. When the tube has been removed from the coupling housing (upon screwing off the coupling socket 10 which contains the clamping ring 10 and/or the sealing rings 13 and 14), the supporting sleeve may, however, be forced into a somewhat inclined position, whereby the retention thereof in the bore is weakened, and it may be pulled out of the coupling housing 5.

## Claims

1. A tube coupling comprising a coupling housing (5) and a supporting sleeve (1) in order to cause an internal stiffening against compression of the end of a tube (16) inserted in the coupling, said supporting sleeve (1) being a separate part for being mounted in a bore in the coupling, and said supporting sleeve (1) comprising a deformable collar (3) which externally is conical and narrowing in the direction of insertion, the edge of the collar having a diameter exceeding the diameter of the bore,
**characterized in that** the collar (3) is adapted to be completely inserted in the bore, that the axial thickness of the collar (3) decreases radially outwardly, and that the radially outermost edge of the collar will press against the wall of the bore upon insertion due to its elasticity.

2. A tube coupling as specified in claim 1, in which said collar (3) also is internally conical, with a larger conus angle than externally.

3. A tube coupling as specified in claim 1 or 2, in which said supporting sleeve (1) comprises a cylindrical portion (2) which shall cause stiffening, and an oppositely directed extension (4), said collar (3) being situated in the transition between the cylindrical portion (2) and the extension (4).

4. A tube coupling as specified in claim 1, 2 or 3, in which said collar (3) is unitary with the remainder of the supporting sleeve.

5. A tube coupling as specified in claim 1, 2 or 3, in which said collar (3) is a separate part mounted on the remainder of the supporting sleeve.

6. A tube coupling as specified in claim 1, 2 or 3, in which said collar (3) and the remainder of the supporting sleeve consist of different materials.

7. A tube coupling as specified in any of the claims 1 - 6, in which said collar (3) is of plastics.

8. A tube coupling as specified in claim 7, in which said collar (3) is of hard plastics.

9. A tube coupling as specified in any of the preceding claims, in which said bore has an annular groove (17) of smaller diameter than the collar (3), and into which the edge of the collar is inserted.

## Patentansprüche

1. Rohrkupplung mit einem Kupplungsgehäuse (5) und einer Stützhülse (1), um eine innere Versteifung gegen ein Zusammendrücken des Endes eines Rohrs (16) zu bewirken, das in die Kupplung eingeführt ist, wobei die Stützhülse (1) ein getrenntes Teil ist, um in einer Bohrung in der Kupplung montiert zu werden, und wobei die Stützhülse (1) einen deformierbaren Kragen (3) umfaßt, der außen konisch ist und sich in Richtung des Einführens verjüngt, wobei die Kante des Kragens einen Durchmesser aufweist, der größer ist als der Durchmesser der Bohrung,
**dadurch gekennzeichnet, daß** der Kragen (3) ausgebildet ist, vollständig in die Bohrung eingeführt zu werden, daß die axiale Dicke des Kragens (3) axial nach außen abnimmt, und daß sich die radial äußerste Kante des Kragens beim Einführen aufgrund seiner Elastizität gegen die Wandung der Bohrung drückt.

2. Rohrkupplung nach Anspruch 1, bei der der Kragen (3) auch innen konisch ist, mit einem größeren Konuswinkel als außen.

3. Rohrkupplung nach Anspruch 1 oder 2, bei der die Stützhülse (1) einen zylindrischen Abschnitt (2) umfaßt, der eine Versteifung bewirkt, und einen sich in entgegengesetzte Richtung erstreckenden Ansatz (4), wobei der Kragen (3) im Übergang zwischen dem zylindrischen Abschnitt (2) und dem Ansatz (4) angeordnet ist.

4. Rohrkupplung nach Anspruch 1, 2 oder 3, wobei der Kragen (3) mit dem Rest der Stützhülse einstückig ist.

5. Rohrkupplung nach Anspruch 1, 2 oder 3, wobei der Kragen (3) ein getrenntes Teil ist, der auf dem Rest der Stützhülse montiert ist.

6. Rohrkupplung nach Anspruch 1, 2 oder 3, wobei der Kragen (3) und der Rest der Stützhülse aus unterschiedlichen Materialien bestehen.

7. Rohrkupplung nach einem der Ansprüche 1 - 6, wobei der Kragen (3) aus Kunststoff besteht.

8. Rohrkupplung nach Anspruch 7, wobei der Kragen (3) aus Hartplastik besteht.

9. Rohrkupplung nach einem der vorhergehenden Ansprüche, wobei die Bohrung eine ringförmige Nut (17) von kleinerem Durchmesser als der Kragen (3) aufweist und in die die Kante des Kragens eingeführt ist.

## Revendications

1. Raccord de tuyau comportant un boîtier de raccord (5) et un manchon de support (1) afin de provoquer un raidissement intérieur à l'encontre d'une compression de l'extrémité d'un tuyau (16) inséré dans le raccord, ledit manchon de support (1) étant une pièce séparée destinée à être montée dans un alésage de raccord, et ledit manchon de support (1) comportant un collier déformable (3) qui extérieurement est conique et se rétrécit dans la direction d'insertion, le bord du collier ayant un diamètre dépassant le diamètre de l'alésage,
**caractérisé en ce que** le collier (3) est adapté pour être complètement inséré dans l'alésage, **en ce que** l'épaisseur axiale du collier (3) diminue radialement vers l'extérieur et **en ce que** le bord radialement le plus à l'extérieur du collier va appuyer contre la paroi de l'alésage lors d'une insertion du fait de son élasticité.

2. Raccord de tuyau selon la revendication 1, dans lequel ledit collier (3) est également intérieurement conique, en ayant un angle de cône plus grand qu'extérieurement.

3. Raccord de tuyau selon la revendication 1 ou 2, dans lequel ledit manchon de support (1) comporte une partie cylindrique (2) qui doit provoquer un raidissement, et un prolongement dirigé de manière opposée (4), ledit collier (3) étant situé dans la transition entre la partie cylindrique (2) et le prolongement (4).

4. Raccord de tuyau selon l'une quelconque des revendications 1 à 3, dans lequel ledit collier (3) est d'un seul tenant avec le reste du manchon de support.

5. Raccord de tuyau selon l'une quelconque des revendications 1 à 3, dans lequel ledit collier (3) est une pièce séparée montée sur le reste du manchon de support.

6. Raccord de tuyau selon l'une quelconque des revendications 1 à 3, dans lequel ledit collier (3) et le reste du manchon de support sont constitués de matériaux différents.

7. Raccord de tuyau selon l'une quelconque des revendications 1 à 6, dans lequel ledit collier (3) est constitué d'une matière plastique.

8. Raccord de tuyau selon la revendication 7, dans lequel ledit collier (3) est constitué d'une matière plastique dure.

9. Raccord de tuyau selon l'une quelconque des revendications précédentes, dans lequel ledit alésage présente une gorge annulaire (17) de diamètre inférieur à celui du collier (3), et dans lequel le bord du collier est inséré.
